Europäisches Patentamt

European Patent Office

Office européen des brevets

(11) Numéro de publication: **0 112 424**
**A1**

## (12) DEMANDE DE BREVET EUROPEEN

(21) Numéro de dépôt: 82402391.5

(22) Date de dépôt: 28.12.82

(51) Int. Cl.³: **C 02 F 1/04, C 02 F 9/00**

(43) Date de publication de la demande: 04.07.84
Bulletin 84/27

(84) Etats contractants désignés: AT BE CH DE GB IT LI NL SE

(71) Demandeur: Ets. CH. SCAREDER & FILS, 18, rue du Lieutenant Bachelier, F-88106 Saint Die (FR)

(72) Inventeur: Henriot, Pierre André, Rue du Onze Novembre Coinches, F-88100 Saint Die (FR)

(74) Mandataire: Dupas, Marie-Cécile et al, Cabinet NETTER 40, rue Vignon, F-75009 Paris (FR)

(54) Procédé et installation d'épuration d'eaux résiduaires industrielles, notamment d'eaux résiduaires de teintureries.

(57) L'invention fournit un procédé et une installation d'épuration d'eaux résiduaires industrielles à demande chimique en oxygène élevée et à matières en suspension fines.

Selon l'invention, avant de mettre en œuvre des processus physico-chimiques du type coagulation-floculation puis filtration, on fait subir directement à l'eau polluèe un traitement d'évaporation par chauffage dans une installation d'évaporation (10), sans avoir recours aux traitements préalables usuels des eaux usées faisant appel à des séparations mécaniques du type dégrillage, décantation, etc.

L'eau épurée obtenue est suffisamment dépolluée pour pouvoir être recyclée directement dans le processus industriel ayant conduit au rejet des eaux à épurer.

1

Procédé et installation d'épuration d'eaux résiduaires
industrielles, notamment d'eaux résiduaires de teintureries

L'invention est relative à un procédé et à une installation
d'épuration d'eaux résiduaires industrielles, et elle s'applique plus particulièrement aux eaux résiduaires de teintureries.

Actuellement, les procédés couramment mis en oeuvre pour épurer les eaux résiduaires industrielles font appel à une première phase d'homogénéisation et épuration sommaire par séparation mécanique (dégrillage, décantation, etc.), une deuxième
phase de réduction de la charge polluante par des procédés
simples, soit biologiques, soit physico-chimiques (coagulation,
floculation puis filtration), et éventuellement une troisième
phase de finition destinée à éliminer les matières dissoutes
résiduelles et faisant appel à des techniques de séparation
fine telles que : séparation par membranes semi-perméables ou
de dialyse, adsorption sur une surface solide à grande surface
spécifique, échange d'ions sur résine, séparation sur celluloses greffées.

Pour des eaux à forte demande chimique en oxygène (DCO) et à
matières en suspension fines, comme le sont par exemple les
eaux de teintureries dont les matières en suspension ont une
dimension de l'ordre de 1 à 2 dixièmes de millimètre, le traitement de coagulation-floculation est de grande importance.

2

Mais, quelles que soient les conditions dans lesquelles est réalisé ce traitement physico-chimique, en particulier quelle que soit la finesse de séparation obtenue au préalable par décantation, la réduction de DCO après ce traitement de coagulation-floculation se limite à 40-50 %.

La DCO des eaux traitées est ainsi en général beaucoup trop importante pour que l'eau puisse être recyclée dans le processus industriel de l'usine dont les rejets sont traités de sorte qu'elle est rejetée en cours d'eau, ce qui entraîne des frais importants d'approvisionnement en eau ainsi que le paiement de taxes relativement élevées pour le rejet direct des eaux usées en cours d'eau protégé.

De plus, et ceci s'applique en particulier aux eaux résiduaires de teintureries, les traitements usuels ne permettent pas de décolorer les eaux rejetées, ce qui empêche irrémédiablement tout recyclage des eaux dans le processus industriel.

Par ailleurs, un autre problème inhérent aux traitements d'épuration usuels réside dans l'élimination des boues obtenues en fin de traitement. Or, pour des eaux à forte DCO et qui requièrent donc pour leur dépollution des quantités importantes d'agent coagulant ou d'agent floculant, le volume des boues obtenues est considérable.

C'est un but de l'invention de fournir un procédé d'épuration d'eaux résiduaires qui permette d'obtenir une eau suffisamment dépolluée pour être recyclée dans le processus industriel. C'est, en particulier, un but de l'invention, de fournir un procédé d'épuration d'eaux résiduaires de teintureries qui permette de décolorer les eaux rejetées.

C'est encore un autre but de l'invention de fournir un procédé qui permette d'obtenir sous forme fortement concentrée la matière polluante extraite des eaux.

3

C'est, enfin, un autre but de l'invention de fournir un procédé et une installation d'épuration d'eaux résiduaires qui soient très simples et économiques.

Ces buts sont atteints, conformément à l'invention, grâce au fait qu'on fait subir directement à l'eau polluée un traitement d'évaporation par chauffage, sans avoir recours aux traitements préalables usuels faisant appel à une séparation mécanique du type dégrillage, décantation, etc, puis on fait subir à l'eau évaporée condensée un processus d'épuration physico-chimique du type coagulation-floculation puis filtration.

Une des caractéristiques essentielles de l'invention est ainsi de faire subir à l'eau polluée une évaporation par chauffage. Or, les techniques d'évaporation ne sont acceptables dans une installation industrielle que si tous les produits obtenus ont une utilité. Il faut en particulier, pour que l'opération soit rentable, pouvoir recycler l'eau distillée obtenue, utiliser la vapeur produite, facilement rejeter les boues formées. Le procédé de l'invention remplit toutes ces conditions.

La Demanderesse s'est en effet aperçue qu'alors que dans tous les traitements d'épuration mis en oeuvre jusqu'à présent les opérations de coagulation-floculation ne permettent pas d'atteindre un rendement, exprimé en réduction de DCO, supérieur à 40-50%, l'évaporation préalable entraîne de façon surprenante une amélioration considérable de l'efficacité de ces traitements physico-chimiques, le rendement obtenu étant de l'ordre de 80 à 95%.

L'évaporation a sur les opérations physico-chimiques mises en oeuvre ultérieurement un effet de synergie manifeste, d'une part, au niveau de la pureté de l'eau obtenue en fin de traitement qui est suffisamment dépolluée pour être recyclée directement dans le processus industriel et, d'autre part, en ce qui concerne plus particulièrement les industries de la

4

teinturerie, au niveau de la qualité de l'eau obtenue et recyclée qui a une teneur en matières incrustantes (calcium, silice, etc.) inférieure à la teneur de l'eau potable, de sorte que la qualité de la teinture réalisée en utilisant l'eau recyclée est améliorée. Cet effet de synergie entre les étapes d'évaporation et de coagulation-floculation se manifeste également au niveau d'une amélioration de l'échange au cours de la vaporisation, grâce aux teneurs en silice et en calcium très faibles de l'eau floculée recyclée.

La vapeur produite lors de l'évaporation par chauffage de l'eau polluée, après séparation des boues, est utilisée pour préchauffer l'eau polluée conduite à l'évaporateur. Ceci a une influence bénéfique sur le coût de l'opération d'évaporation, minimisant les besoins en énergie nécessaires pour le chauffage de l'eau.

Finalement, le volume des boues récupérées en fin de traitement est faible : l'évaporation ayant, en effet, un rendement en réduction de DCO de l'ordre de 75 à 90 %, le traitement ultérieur par coagulation-floculation sur une eau déjà fortement dépolluée ne fournit que peu de boues.

L'installation selon l'invention comprend un évaporateur, un séparateur relié à la sortie de vapeur de l'évaporateur pour séparer les boues de la vapeur d'eau polluée formée, un dispositif de coagulation-floculation relié directement à la sortie d'eau évaporée condensée en provenance du séparateur, éventuellement un dispositif de décantation de l'eau floculée et un dispositif de filtration de l'eau floculée.

Cette installation est d'une grande simplicité. Elle supprime les dispositifs du dégrillage, décantation préalable, etc. couramment utilisés dans les procédés de traitement d'eau usuels et qui occupent toujours de grandes surfaces. Elle supprime également les dispositifs de séparation fine des

5

matières résiduelles contenues dans l'eau traitée habituellement nécessaires dans les procédés actuels.

L'invention est maintenant décrite plus en détail en référence aux dessins annexés, dans lesquels :

la figure 1 est un schéma d'une installation d'évaporation dans laquelle est effectuée la première phase du procédé selon l'invention; et

la figure 2 représente schématiquement la succession des opérations de traitement d'eau effectuées après l'évaporation.

Conformément à l'invention, l'eau à épurer est soumise directement à une évaporation par chauffage avant d'être soumise à un traitement physico-chimique du type coagulation-floculation.

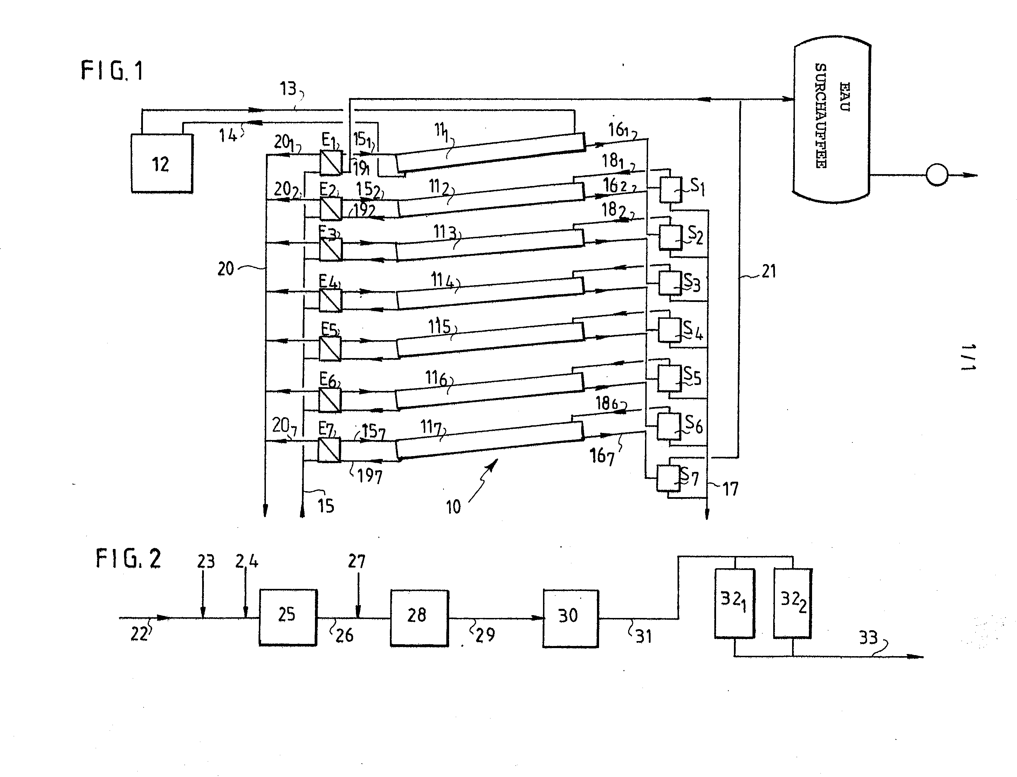

L'installation d'évaporation 10, représentée sur la figure 1, comporte plusieurs étages, dans le cas présent sept. Le premier étage $11_1$, ou étage supérieur, est alimenté en un fluide caloporteur provenant d'une chaudière 12 par une canalisation 13 et y retournant par une canalisation 14. L'eau polluée provenant d'une canalisation principale 15 est fournie à l'évaporateur $11_1$ par une canalisation $15_1$ en passant par un économiseur $E_1$ dans lequel elle est préchauffée. La vapeur sale produite dans l'évaporateur en sort par une canalisation $16_1$ qui l'amène jusqu'à un séparateur $S_1$, par exemple un séparateur centrifuge, à la sortie duquel on obtient d'une part des boues qui se rassemblent dans une canalisation 17 et, d'autre part, de la vapeur propre.

Cette vapeur propre est utilisée comme fluide caloporteur dans l'évaporateur $11_2$ du deuxième étage. Elle y est amenée par une canalisation $18_1$ et l'eau évaporée qui se condense sort de l'évaporateur par une canalisation $19_2$ puis passe dans un économiseur $E_2$ dans lequel elle est utilisée pour

6

préchauffer l'eau polluée amenée de la canalisation 15 dans l'économiseur. L'eau polluée préchauffée sortant de l'économiseur par la canalisation $15_2$ est introduite dans l'évaporateur $11_2$ où elle est évaporée par suite de l'échange de chaleur avec la vapeur propre et elle en sort par une canalisation $16_2$ qui l'amène dans un séparateur centrifuge $S_2$ lequel fournit, d'une part, des boues se rassemblant dans la canalisation 17 et, d'autre part, de la vapeur propre amenée par une canalisation $18_2$ dans l'évaporateur $11_3$ du troisième étage.

L'eau polluée, la vapeur propre de chauffage et l'eau évaporée condensée suivent des trajets analogues dans les étages 3 à 7. La vapeur qui sort du dernier évaporateur $11_7$ par la canalisation $16_7$ est envoyée dans le séparateur centrifuge $S_7$ et la vapeur propre obtenue est alors conduite par une canalisation 21 où elle se condense dans l'économiseur $E_1$ du premier étage d'évaporation, pour préchauffer l'eau polluée entrant dans cet étage.

On constate ainsi que les besoins en énergie de l'installation d'évaporation sont uniquement ceux dûs au chauffage du fluide caloporteur du premier étage d'évaporation, les autres étages fonctionnant avec de la vapeur propre issue de l'étage immédiatement précédent comme fluide caloporteur.

Les eaux évaporées condensées sortant de chaque évaporateur par les canalisations $20_1$ ... $20_7$ se rassemblent dans une canalisation 20 reliée à une canalisation 22 d'amenée des eaux en cours d'épuration dans une installation de traitement physico-chimique (figure 2).

A cette canalisation 22 sont reliés, en des emplacements déterminés, un dispositif 23 de dosage et d'addition à l'eau distillée d'un produit de réglage du pH pour amener l'eau au pH approprié pour réaliser une opération de coagulation ultérieure dans des conditions satisfaisantes, puis un dispositif

24 de dosage et d'addition à l'eau du ou des produits coagulants utilisés. L'eau pénètre alors dans un appareil de coagulation 25 : le produit coagulant déstabilise les émulsions de matières polluantes que contient l'eau évaporée et qui sont sous forme très finement dispersées. Ces techniques étant connues, elles ne seront pas décrites plus en détail.

A la canalisation 26 de sortie de l'eau après traitement de coagulation, est raccordé un dispositif 27 de dosage et d'addition à l'eau d'un ou de plusieurs produits floculants. L'eau est alors amenée à un dispositif de floculation 28 dans lequel vont se former les précipitations ou floculations induites par le produit floculant.

L'eau floculée sort par une canalisation 29, est amenée éventuellement dans un dispositif de décantation 30 duquel elle sort par une canalisation 31 qui la conduit dans un dispositif de filtration 32 comportant, dans le cas présent, deux éléments de filtration sur sable $32_1$ et $32_2$. L'eau filtrée est alors récupérée dans une canalisation 33 et elle est soit recyclée dans le processus industriel en cours, soit rejetée en cours d'eau protégé.

Comme produit de réglage du pH, on utilise, selon le pH désiré et le pH de l'eau évaporée condensée à traiter, de la soude, de la potasse ou analogue, ou de l'acide formique, acétique ou analogue.

Comme produit coagulant, on utilise, selon les substances polluantes que contient l'eau évaporée condensée, les produits usuels tels que sulfate d'alumine, chlorure ferrique, chaux, chlorure de calcium, sulfate ferreux, chlorure de magnésium et analogue.

Comme produit floculant, on utilise, également en fonction de la teneur en substances polluantes de l'eau évaporée condensée,

8

des floculants minéraux tels que silice activée, bentonite, hydroxyde métallique à structure polymère, ou bien des floculants naturels tels que des polymères hydrosolubles à charge anionique, cationique ou neutre, des dérivés amylacés (amidon de maïs, fécule de pomme de terre, etc.) des polysaccharides, des alginates, etc., ou bien encore des floculants synthétiques tels que des polyacrylamides copolymérisés avec de l'acide acrylique (anioniques), des composés aminés (cationiques), des polyéthylènes-imines, des polyamides amines, des polyamides, des polyoxydes d'éthylène, des composés sulfonés et analogues.

On va décrire ci-après, à titre nullement limitatif, un exemple de traitement selon l'invention d'une eau de teinturerie.

La composition moyenne de l'eau polluée était la suivante :
- DCO 2500 à 3000 mg/litre ;
- DBO$_5$ environ 450 à 600 mg/litre ;
le rapport DCO/DBO$_5$ est ici trop élevé pour permettre une dégradation des matières polluantes par traitement biologique;
- extrait sec 0,4 % ;
composition de l'extrait sec : matières minérales 50 % matières organiques 50 %.

Les matières minérales se composent de : silice $SiO_2$ 18 %

calcium CaO 11 % cuivre Cu 3 %

fer $Fe_2O_3$ 6 %

sulfite $SO_3$ 9 %

phosphate $P_2O_5$ 3 %.

Les matières organiques comprennent des produits tensioactifs de polarités diverses et des substances en provenance des matières premières et des matières colorantes.

Comme produits tensioactifs, on trouve des produits anioniques

9

(sulfonates de produits synthétiques), des produits non ioniques (alcools et amines gras éthoxylés), des produits cationiques (amines grasses quaternisées).

Les substances en provenance des matières premières sont constituées d'huiles d'ensimage, d'oligomères de fibres synthétiques, de cires et de matières pectiques du coton.

Les matières colorantes sont des substances azoïques, polyazoïques, anthraquinoniques, solubles ou non solubles.

Cette eau a été traitée conformément à l'invention.

L'eau polluée a d'abord été soumise à une évaporation dans une installation du type de celle décrite ci-dessus en référence à la figure 1.

Les conditions de fonctionnement de l'installation d'évaporation étaient les suivantes :

$\% \left( \dfrac{\text{vapeur résiduelle}}{\text{eau polluée}} \right) = 10$

Nombre d'étages = 7

Température de l'eau polluée : 50°C

Température de l'eau distillée : 65°C

Pression de vapeur résiduelle saturée : 7 bars efficaces Température de vapeur résiduelle saturée : 170°C

Température aller et retour du fluide caloporteur du premier étage : 260 – 240°C

Température de la vapeur de sortie du premier étage : 225°C Température de la vapeur de sortie des étages suivants : diminution de 7 à 8°C par étage.

L'eau évaporée condensée obtenue à la sortie de l'installation d'évaporation est alors soumise à un traitement de coagulation-floculation-filtration.

Pour une telle eau, on utilise comme agent coagulant, de façon appropriée, du bicarbonate de soude et/ou du sulfate d'alumine.

Comme agent floculant, on utilise des composés de type polyamines.

Les caractéristiques moyennes de l'eau ainsi traitée étaient les suivantes :

Caractéristiques de l'eau après évaporation :

DCO 600 mg/litre

extrait sec : 0,040 %

composition en % identique à l'eau polluée ;

turbidité : UJ 65.

Caractéristiques moyennes de l'eau floculée :

DCO : 40 mg/litre

extrait sec non mesuré

turbidité : UJ 1 à 2 (meilleure que l'eau potable).

dureté 2°f

alcalinité TAC 12°f

chlorure 53,6 mg/litre

silice 2 mg/litre.

On aboutit ainsi globalement à une réduction de la DCO de 98 %. L'eau peut être directement recyclée dans le processus industriel de teinture. De plus, cette eau présente un taux de matières incrustantes inférieur à celui de l'eau potable, ce qui permettra d'améliorer la qualité de la teinture au cours du cycle suivant du processus industriel.

Le traitement de coagulation-floculation, réalisé sur l'eau évaporée condensée, fournit une réduction de la DCO de 93 %, progrès considérable par rapport aux rendements habituels des traitements de coagulation-floculation et qui n'atteignent, en général, que 40 à 50 %.

Revendications

1. Procédé d'épuration d'eaux résiduaires industrielles à demande chimique en oxygène élevée et à matières en suspension fines, caractérisé en ce qu'on fait subir directement à l'eau polluée un traitement d'évaporation par chauffage, sans avoir recours aux traitements préalables usuels des eaux usées faisant appel à des séparations mécaniques du type dégrillage, décantation, etc., la vapeur produite lors de l'évaporation de l'eau polluée étant séparée des boues, et en ce que l'eau évaporée condensée est ensuite soumise à un processus d'épuration physico-chimique du type coagulation-floculation puis filtration".

2. Procédé selon la revendication 1, caractérisé en ce que la vapeur produite lors de l'évaporation de l'eau polluée, après séparation des boues, est utilisée pour préchauffer l'eau polluée.

3. Procédé selon la revendication 1 ou 2, caractérisé en ce que l'eau dépolluée est recyclée directement dans le processus industriel ayant conduit au rejet des eaux à épurer.

4. Application du procédé selon l'une quelconque des revendications 1 à 3 aux eaux résiduaires des teintureries.

5. Installation pour la mise en oeuvre du procédé selon la revendication 1, caractérisée en ce qu'elle comprend un évaporateur (11) relié directement à la canalisation de sortie (15) des eaux résiduaires, un séparateur (S) relié à la sortie de vapeur de l'évaporateur pour séparer les boues de la vapeur d'eau polluée formée, un dispositif de coagulation-floculation (25, 28) relié directement à la canalisation (20) de sortie de l'eau évaporée condensée, éventuellement un dispositif de décantation (30), et un dispositif de filtration (32).

6. Installation selon la revendication 5, caractérisée en ce qu'elle comprend un évaporateur à au moins deux étages, la sortie de vapeur du dernier étage étant reliée, en passant par un séparateur, à l'entrée d'eau polluée dans le premier étage de l'évaporateur à des fins de préchauffage de l'eau à épurer.

7. Installation selon la revendication 5 ou 6, caractérisée en ce qu'elle comprend un évaporateur à au moins deux étages, la sortie de vapeur de chaque étage mis à part le dernier étant reliée, en passant par un séparateur, à l'évaporateur de l'étage suivant pour y amener la vapeur en tant que fluide caloporteur, puis à l'entrée d'eau polluée dans cet étage à des fins de préchauffage de l'eau à épurer.

0112424

1/1

FIG.1

FIG.2

EAU SURCHAUFFEE

0112424

Office européen
des brevets

**RAPPORT DE RECHERCHE EUROPEENNE**

Numéro de la demande

EP 82 40 2391

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| E | FR-A-2 513 984 (ETS. CH. SCAREDER & FILS) <br> * En entier * | 1-7 | C 02 F 1/04 <br> C 02 F 9/00 |
| X | FR-A-2 365 359 (F. KOPPL) <br> * En entier * | 1-7 | |
| X | FR-A-2 267 285 (EUROTECNICA) <br> * En entier * | 1-7 | |
| A | FR-A-2 222 321 (SPEICHIM) <br> * Pages 4-6 * | 1 | |
| A | FR-A-2 260 549 (SAINT-GOBAIN) <br> * Page 5, lignes 18-38 * | 1 | |

DOMAINES TECHNIQUES RECHERCHES (Int. Cl. ³)

C 02 F

Le présent rapport de recherche a été établi pour toutes les revendications

| Lieu de la recherche | Date d'achèvement de la recherche | Examinateur |
|---|---|---|
| LA HAYE | 24-08-1983 | VAN AKOLEYEN H.T.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82